# EUROPÄISCHE PATENTSCHRIFT

(11) **EP 2 195 595 B1**
(45) Veröffentlichungstag und Bekanntmachung des Hinweises auf die Patenterteilung: **17.08.2011**
(21) Anmeldenummer: 08774298.7
(22) Anmeldetag: 25.06.2008
(51) Int. Cl.: F27B 7/20, C04B 7/43, B01D 45/12, B04C 1/00

(54) **VORRICHTUNG ZUR DURCHFÜHRUNG CHEMISCHER UND/ODER PHYSIKALISCHER REAKTIONEN ZWISCHEN EINEM FESTSTOFF UND EINEM GAS**
DEVICE FOR PERFORMING CHEMICAL AND/OR PHYSICAL REACTIONS BETWEEN A SOLID MATERIAL AND A GAS
DISPOSITIF POUR RÉALISER DES RÉACTIONS CHIMIQUES ET/OU PHYSIQUES ENTRE UNE MATIÈRE SOLIDE ET UN GAZ

(43) Veröffentlichungstag der Anmeldung: 16.06.2010
(73) Patentinhaber: Polysius AG, 59269 Beckum (DE)
(72) Erfinder: GEORG, Verena, 58313 Herdecke (DE); KUPPER, Detlev, 48291 Telgte (DE); LAGAR GARCIA, Luis, 33001 Oviedo (ES); HOPPE, Andreas, 59555 Lippstadt (DE); THIEMEYER, Heinz-Werner, 59320 Ennigerloh (DE); KLEGRAF, Daniel, 59602 Rüthen-Westereiden (DE); DECK, Thomas, 59320 Ennigerloh (DE); RICHTER, Stefanie, 32756 Detmold (DE)
(74) Vertreter: Tetzner, Michael
(86) Internationale Anmeldenummer: PCT/EP2008/058108
(87) Internationale Veröffentlichungsnummer: WO 2009/155977

(56) Entgegenhaltungen:
- US-A- 4 318 692

## Beschreibung

Die Erfindung betrifft eine Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien, mit mehreren, übereinander angeordneten Stufen.

In der Zement- und Mineralsindustrie sind zur Vorwärmung, Kühlung und/oder Calcinierung von feinkörnigen Materialien insbesondere Systeme bestehend aus Gleichstromwärmetauscher und Zyklonabscheider bekannt. Meist weisen derartige Vorrichtungen mehrere übereinander angeordnete Stufen auf, wobei der Gasstrom von unten nach oben durch alle Stufen geleitet wird, während der Feststoff in entgegengesetzter Richtung den einzelnen Stufen zugeführt wird.

Derartige Systeme haben den Nachteil, dass sie eine enorme Bauhöhe benötigen und der Abscheidegrad im Zyklonabscheider nicht immer befriedigend ist. So kommt es in den Zyklonen oftmals zu unkontrollierten Strömungen, die beispielsweise am Zykloneintritt durch Überlagerung des Eintrittsgasstromes mit dem im Zyklon ausgebildeten Wirbelstrom oder durch Umkehr der Gasströmungsrichtung im Konus des Zyklons bedingt sind. Weiterhin kann es zum Wiedereinstreuen der schon am Zyklonrand abgeschiedenen Partikel in den Gaseintrittstrom des Zyklons kommen.

Eine weitere Problematik besteht darin, dass sich bei unterschiedlich großen Bauformen die Zentrifugalkräfte bei gleichen Eintrittsgeschwindigkeiten verändern und sich dadurch andere Abscheideverhältnisse ergeben.

In der US 4,318,692 wurde daher ein mehrstufiger Vorwärmer für Zementrohmaterial vorgeschlagen, dessen einzelne Stufen jeweils aus einer Steigleitung und einer sich anschließenden wendel- und/oder spiralartigen Leitung bestehen. Die wendel- und/oder spiralartige Leitung weist einen rechteckigen Querschnitt auf und ist an einer Seitenfläche einer quaderförmigen Abscheidekammer angeschlossen. Die Anschlussstelle erstreckt sich dabei über die gesamte Seitenfläche der quaderförmigen Abscheidekammer. Der untere Teil des Abscheidekammer verjüngt sich trichterförmig und dient zum Abführen des Feststoffs, während das Gas noch oben abgeleitet wird.

Der Erfindung liegt nun die Aufgabe zugrunde, die Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien, hinsichtlich des Abscheidegrads in der Abscheidekammer zu verbessern.

Erfindungsgemäß wird diese Aufgabe durch die Merkmale des Anspruches 1 gelöst.

Die erfindungsgemäße Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien besteht im Wesentlichen aus wenigstens einer wendel- und/oder spiralartigen Leitung, in der durch Zentrifugalkräfte eine Gas-Feststoff-Suspension in einen Feststoffstrom und einen Gasstrom getrennt wird und wenigstens einer mit dem Ende der wendel- und/oder spiralartigen Leitung in Verbindung stehenden Abscheidekammer, die mit einer Gasleitung zum Ableiten des Gasstroms in Verbindung steht oder die durch einen Teil der Gasleitung gebildet wird, wobei an die Abscheidekammer eine Feststoffleitung zum Ableiten des Feststoffstroms angeschlossen ist. Die wendel- und/oder spiralartige Leitung mündet tangential unter einem Winkel gegenüber der Horizontalen von mindestens 30° in die Abscheidekammer und der Querschnitt der Abscheidekammer im Bereich der Einmündung ist 0,5 bis 1,5 mal zu groß wie der Querschnitt der wendel- und/oder spiralartigen Leitung.

Die wendel- und/oder spiralartige Leitung weist somit zumindest im Bereich der Einmündung in die Abscheidekammer eine Steigung gegenüber der Horizontalen von mindestens 30° auf.

Unter einer wendel- und/oder spiralartigen Leitung im Sinne der Erfindung wird eine Leitung verstanden, die zumindest abschnittsweise wendel- und/oder spiralförmig ausgebildet ist. Die Drehung der wendel- und/oder spiralartigen Leitung kann sich dabei insbesondere auch nur über einen kleineren Winkelbereich, von beispielsweise 90°, erstrecken.

Im Gegensatz zu der Ausführung gemäß der US 4,318,692 ist die wendel- und/oder spiralartige Leitung nicht an eine komplette Seitenfläche der Abscheidekammer sondern vielmehr tangential angeschlossen. Des Weiteren mündet die wendelund/oder spiralartige Leitung der US 4,318,692 über einen horizontal ausgerichteten Anschlussstützen in die Abscheidekammer.

Die Anbindung der wendel- und/oder spiralartigen Leitung unter einem Winkel gegenüber der Horizontalen von mindestens 30° in Verbindung mit der tangentialen Einmündung ermöglicht eine Weiterführung des Feststoffstromes in einem Bogen an der Wandung der Abscheidekammer nach unten. Der Gasstrom wird hingegen in einer Art Drallströmung nach oben abgezogen.

Bei den der Erfindung zugrundeliegenden Versuchen hat sich gezeigt, dass es weiterhin von entscheidender Bedeutung ist, dass der Querschnitt der Abscheidekammer im Bereich der Einmündung 0,5 bis 1,5 mal so groß ist wie der Querschnitt der wendel- und/oder spiralartigen Leitung. Sofern sich der Querschnitt der wendel- und/oder spiralartigen Leitung über ihre Länge ändert, kommt es bei dem Querschnittsverhältnis insbesondere auf den Querschnitt der wendel- und/oder spiralartigen Leitung im Bereich der Einmündung in die Abscheidekammer an.

Bei herkömmlichen Abscheidezyklonen ist die Gas-Feststoff-Suspensionsleitung zwar auch meist tangential angeschlossen, sie weist jedoch im Vergleich zum Querschnitt der Abscheidekammer einen wesentlich kleineren Querschnitt auf und ist zudem horizontal angebunden.

Bei den der Erfindung zugrundeliegenden Versuchen hat sich gezeigt, dass die erfindungsgemäße Vorrichtung einen hervorragenden Abscheidegrad bei vergleichsweise geringem Druckverlust ermöglicht. Es findet außerdem auch keine negative Beeinflussung des in die Abscheidekammer eintretenden Feststoff-Gasstromes und dem aus der Abscheidekammer abzuführenden Feststoffstrom bzw. Gasstrom statt.

Weitere Ausgestaltungen der Erfindung sind Gegenstand der Unteransprüche.

Gemäß einer bevorzugten Ausgestaltung der Erfindung ist die Abscheidekammer rund, insbesondere rotationssymmetrisch ausgebildet.

Des Weiteren ist die Feststoffleitung im unteren Bereich der Abscheidekammer und die Gasleitung im oberen Bereich der Abscheidekammer angeschlossen. Der untere Teil der Abscheidekammer kann sich zu dem trichterförmig verjüngen, wobei die Feststoffleitung an den trichterförmig verjüngten Teil der Abscheidekammer angeschlossen wird.

Der Querschnitt der Abscheidekammer im Bereich der Einmündung ist vorzugsweise 0,5 bis 1,5 mal so groß wie der Querschnitt der Gasleitung. Gemäß einer Ausgestaltung der Erfindung bildet der untere Teil der Gasleitung die Abscheidekammer. Es ist aber auch denkbar, dass die Gasleitung nach Art eines Tauchrohres in die Abscheidekammer hineinragt.

Die Vorrichtung kann insbesondere als Vorwärmer oder Calcinator bei der Zementherstellung verwendet werden. Im Falle eines Vorwärmers ist insbesondere eine mehrstufige und/oder mehrsträngige Anordnung mit mehreren Abscheidekammern und zugehörigen wendel- und/oder spiralartigen Leitungen vorteilhaft.

Weitere Vorteile und Ausgestaltungen der Erfindung werden im Folgenden anhand der Beschreibung und der Zeichnung näher erläutert.

In der Zeichnung zeigen
- Fig. 1: eine Seitenansicht einer erfindungsgemäßen Vorrichtung,
- Fig. 2: eine um 90° gedrehte Seitenansicht gemäß Fig. 1,
- Fig. 3: eine Draufsicht der Stufe gemäß Fig. 1,
- Fig. 4: eine Schnittdarstellung der Abscheidekammer längs der Linie N-IV der Fig. 1,
- Fig. 5: eine Schnittdarstellung der wendel- und/oder spiralartigen Leitung längs der Linie V-V der Fig. 3,
- Fig. 6: eine Seitenansicht der Vorrichtung gemäß einem zweiten Ausführungsbeispiel,
- Fig. 7: eine Seitenansicht der Vorrichtung gemäß einem dritten Ausführungsbeispiel,
- Fig. 8: eine Seitenansicht der Vorrichtung mit drei übereinander angeordneten Stufen,
- Fig. 9: eine Draufsicht der Vorrichtung gemäß Fig. 8 und
- Fig. 10: eine dreidimensionale Darstellung einer Anlage zur Herstellung von Zementklinker.

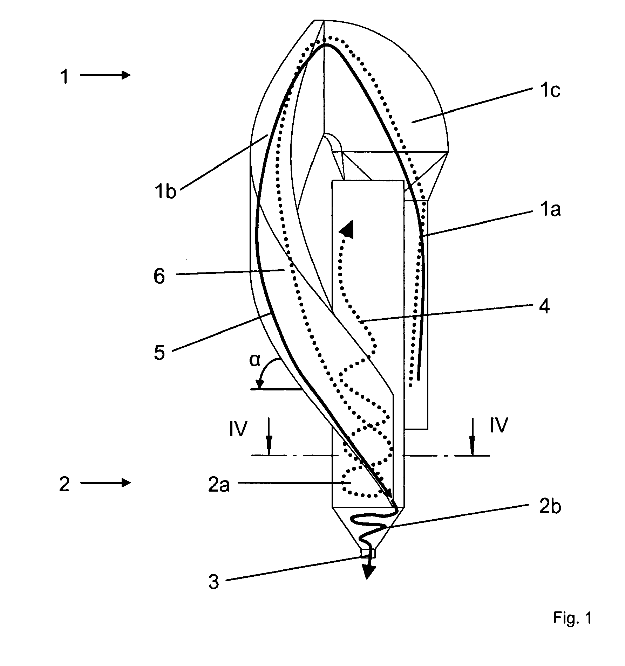

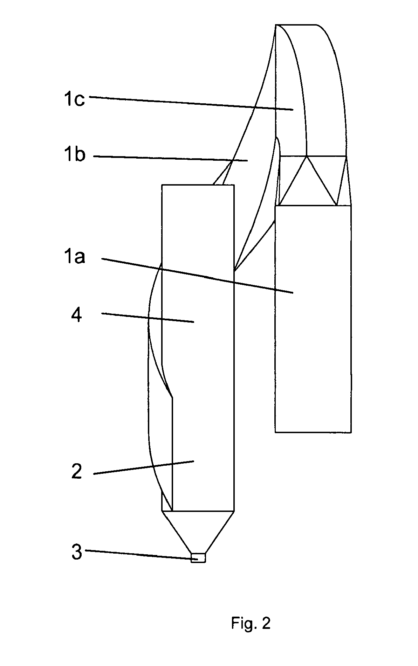

In den Figuren 1 bis 5 ist eine Vorrichtung zur Durchführung chemischer und/oder physikalischer Reaktionen zwischen einem Feststoff 5 und einem Gas 6 dargestellt. Hierbei kann es sich beispielsweise um einen Vorwärmer oder Calcinator zur Wärmebehandlung von feinkörnigem Gut bei der Zementherstellung handeln.

Die Vorrichtung besteht im Wesentlichen aus einer Gas-Feststoff-Suspensionsleitung 1, einer Abscheidekammer 2 zum Trennen des zugeführten Feststoffs vom zugeführten Gas, einer Feststoffleitung 3 zum Ableiten des abgetrennten Feststoffs sowie einer Gasleitung 4 zum Ableiten des abgetrennten Gases.

Zur Durchführung chemischer und/oder physikalischer Reaktion zwischen einem Feststoff 5 und einem Gas wird die Gas-Feststoffsuspension über die Gas-Feststoff-Suspensionsleitung 1 der Abscheidekammer 2 zugeführt.

Die Gas-Feststoff-Suspensionsleitung 1 weist einen als Steigleitung 1a ausgebildeten aufsteigenden und einen als wendel- und/oder spiralartige Leitung 1b ausgebildeten absteigenden Leitungsabschnitt auf. Weiterhin ist ein Umlenkkopf 1c vorgesehen, der die Steigleitung 1a mit der wendel- und/oder spiralartigen Leitung 1b verbindet. In vertikaler Richtung betrachtet liegt zumindest der Anfang der wendel- und/oder spiralartigen Leitung 1b höher als ihr Mündungsende an der Abscheidekammer 2.

In der wendel- und/oder spiralartigen Leitung 1b kommt es aufgrund der Zentrifugalkräfte zu einer Trennung der Gas-Feststoff-Suspension in einen Feststoffstrom und einen Gaststrom.

Die wendel- und/oder spiralartige Leitung 1b mündet im dargestellten Ausführungsbeispiel tangential unter einem Winkel α gegenüber der Horizontalen von mindestens 30°, vorzugsweise in einem Bereich von 30° bis 60°, in die Abscheidekammer 2. Im Bereich der Einmündung ist die Abscheidekammer 2 als zylindrischer Teil 2a ausgebildet, an dem sich unterhalb ein trichterförmig verjüngender Teil 2b anschließt.

Die Feststoffleitung 3 ist an den sich trichterförmig verjüngenden Teil 2b der Abscheidekammer angeschlossen, während der zylindrische Teil 2a in die Gasleitung 4 übergeht.

Im dargestellten Ausführungsbeispiel weist die Gasleitung 4 und der zylindrische Teil 2a der Abscheidekammer den gleichen Durchmesser auf. Man könnte daher auch davon sprechen, dass die Abscheidekammer durch den unteren Teil der Gasleitung 4 gebildet wird.

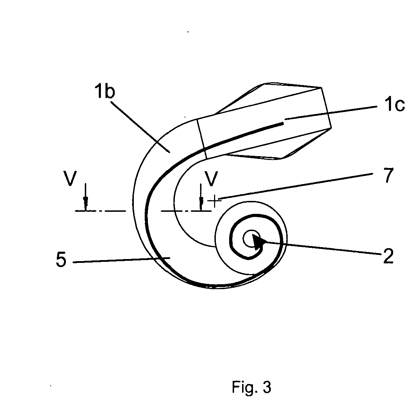

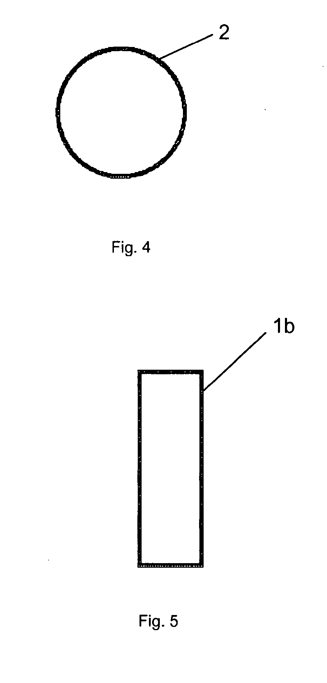

In den Figuren 4 und 5 ist der Querschnitt der Abscheidekammer 2 in der Schnittebene IV-IV der Fig. 1 und der Querschnitt der wendel- und/oder spiralartigen Leitung 1b in der Schnittebene V-V der Fig. 3 dargestellt.

Der lichte Querschnitt der Abscheidekammer im Bereich der Einmündung der wendel- und/oder spiralartigen Leitung soll 0,5 bis 1,5 mal so groß sein wie der lichte Querschnitt der wendel- und/oder spiralartigen Leitung.

Durch diese Dimensionierung und die schräg nach unten gerichtete und tangential an die Abscheidekammer 2 angeschlossene wendel- und/oder spiralartige Leitung 1b wird der Feststoff 5 in einem Bogen in den sich trichterförmig verjüngenden Teil 2b der Abscheidekammer geleitet und gelangt dann in die Feststoffleitung 3 (siehe Fig. 1 und 3).

Das Gas 6 wird an der Innenwandung des zylindrischen Teils 2a der Abscheidekammer mit einem Drall nach oben in die Gasleitung 4 abgeführt (siehe Fig. 1). Die schräg nach unten gerichtete Strömung in die Abscheidekammer 2 verhindert auch, dass es im Bereich der Mündung der wendel- und/oder spiralartigen Leitung 1b zu einer Überlagerung des Eintrittsgasstromes mit der in der Abscheidekammer ausgebildeten Drallströmung kommt.

Wie aus Fig. 3 zu ersehen ist, erstreckt sich die wendel- und/oder spiralartige Leitung 1b über einen Winkelbereich von etwa 180°. Im Rahmen der Erfindung kann der Winkelbereich aber auch größer oder kleiner gewählt werden. Weiterhin ist es denkbar, dass sich der Radius und/oder die Steigung und/oder die Querschnittsform und/oder die Querschnittsgröße der wendel- und/oder spiralartigen Leitung 1b in Strömungsrichtung der Gas-Feststoff-Suspension ändert.

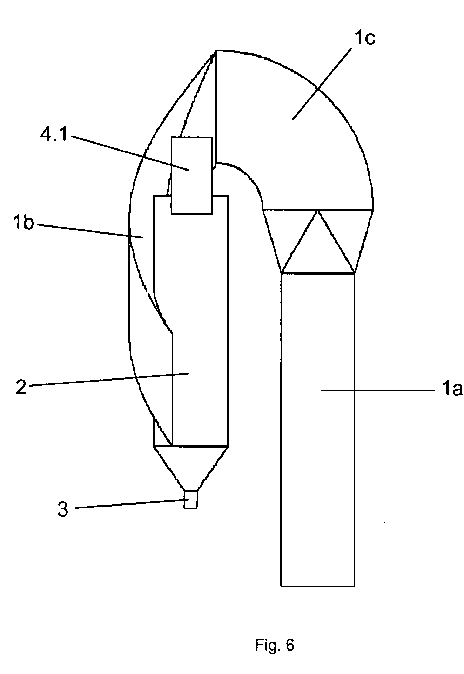

Fig. 6 zeigt ein Ausführungsbeispiel, bei dem die Gasleitung 4.1 einen kleineren Durchmesser als die Abscheidekammer 2 aufweist und nach Art eines Tauchrohres in die Abscheidekammer 2 ragt.

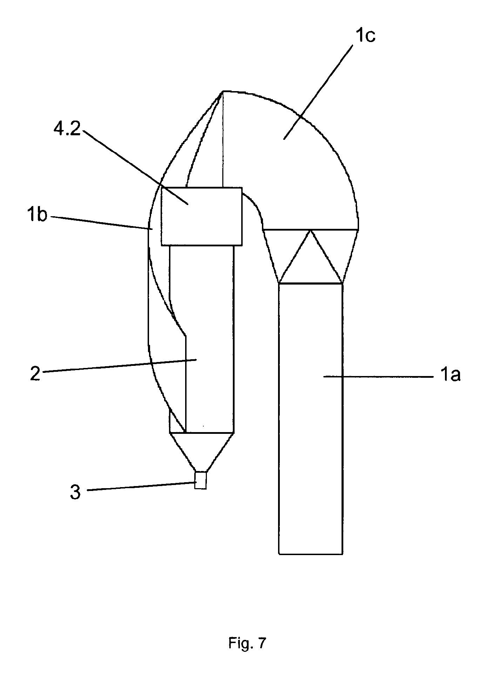

Im Ausführungsbeispiel gemäß Fig. 7 weist die Gasleitung 4.2 einen größeren Durchmesser auf als die Abscheidekammer 2. Es hat sich aber bei den der Erfindung zugrundeliegenden Versuchen als vorteilhaft herausgestellt, wenn der Querschnitt der Abscheidekammer 2 im Bereich der Einmündung 0,5 bis 1,5 mal so groß ist wie der Querschnitt der Gasleitung.

Die Gasleitung kann aber in Gasströmungsrichtung wenigstens eine erste und eine zweite Querschnittsgröße und/oder -form aufweisen.

Die Achse der wendel- und/oder spiralartigen Leitung 1b ist vorzugsweise vertikal Es wäre aber auch denkbar, dass die Achse, um die sich die wendel- bzw. spiralartige Leitung (1b) dreht, gegenüber der Vertikalen geneigt ist.

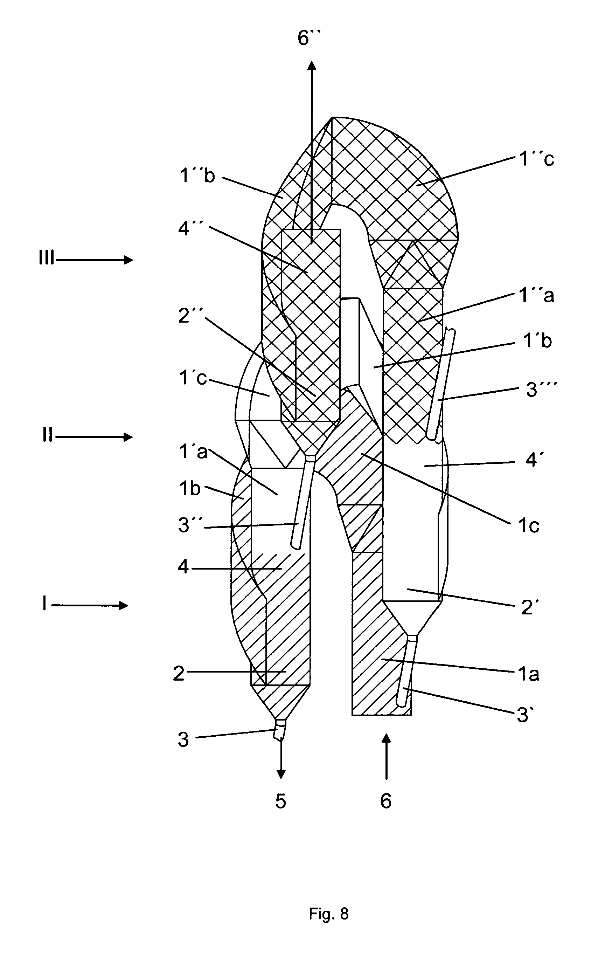

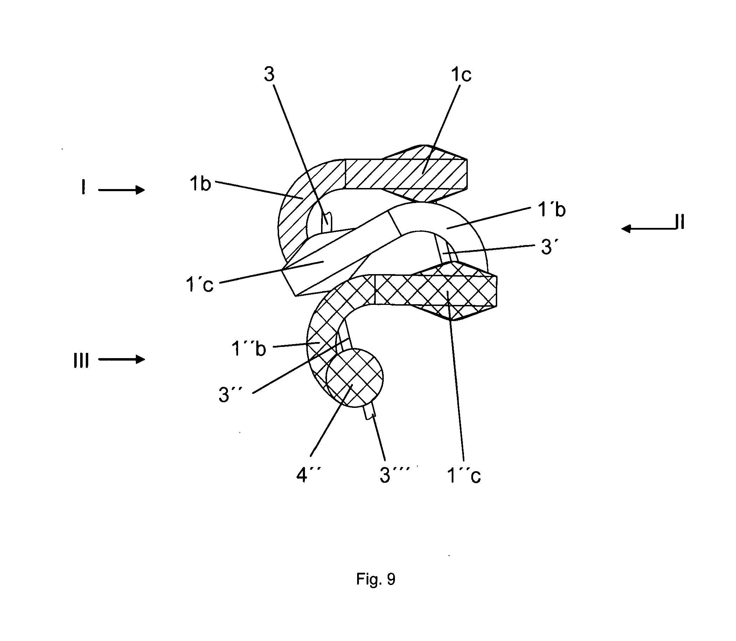

Im Folgenden wird anhand der Figuren 8 und 9 eine Vorrichtung mit drei Stufen I, II, III beschrieben, bei der es sich beispielsweise um einen dreistufigen Vorwärmer für Zementrohmaterial handelt. Jede einzelne Stufe kann dabei entsprechend den Figuren 1 bis 7 ausgebildet sein.

Bei einer solchen mehrstufigen Anordnung wird ein zu behandelnder Feststoff in der obersten Stufe III über eine Feststoffleitung 3"' zugeführt und als behandelter Feststoff 5 aus der untersten Stufe 1 abgeführt. Die Feststoffleitung mündet jeweils im Bereich der Steigleitungen der einzelnen Stufen, während die Gasleitung einer Stufe in die Steigleitung der nächst höher gelegenen Stufe übergehen.

Während der Feststoff somit von oben nach unten durch die drei Stufen geführt wird, durchströmt das Gas die Anordnung in umgekehrter Richtung. Bei dem der untersten Stufe zuzuführenden Gas 6 handelt es sich beispielsweise um das heiße Abgas eines Ofens oder eines Calcinators. Das in der dritten Stufe über die Gasleitung 4" abgeführte Gas 6" wird beispielsweise zur Entstaubung einen Filter oder einem nachgeschalteten hocheffizienten Abscheider zugeführt. Der behandelte Feststoff 5 gelangt beispielsweise in einen Calcinator oder einen Ofen zur weiteren Bearbeitung.

Durch die Ausbildung der Gas-Feststoff-Suspensionsleitung 1 mit einer Steigleitung 1a und einer absteigenden, wendel- oder spiralartigen Leitung 1b können die drei Stufen sehr kompakt und ineinander verschlungen angeordnet werden. Es ist weiter vorgesehen, dass die wendel- oder spiralartigen Leitungen 1b, 1'b, 1"b wenigstens zweier aufeinanderfolgenden Stufen abwechselnd links- und rechtsdrehend ausgebildet sind (siehe Fig. 9).

Im Rahmen der Erfindung ist es denkbar, dass sich der Radius und/oder die Steigung und/oder die Querschnittsform und/oder die Querschnittsgröße der wendel- und/oder spiralartigen Leitung 1b im Strömungsrichtung der Gas-Feststoff-Suspension ändert. Auf diese Weise kann einerseits Einfluss auf die Vorseparierung der Gas-FeststoffSuspension im Bereich der wendel- und/oder spiralartigen Leitung genommen werden und andererseits kann die wendel- und/oder spiralartige Leitung 1b an äußere Gegebenheiten angepasst werden. Dies ist insbesondere dann von Vorteil, wenn mehrere Stufen ineinander verschachtelt und übereinander angeordnet werden.

Der Radius, Steigung, Querschnittsform und/oder Querschnittsgröße können sich dabei in Strömungsrichtung sprunghaft und/oder zumindest in einem Abschnitt auch kontinuierlich ändern. So bewirkt beispielsweise eine Radiusverringerung einer Erhöhung der Zentrifugalkraft, während ein Radiuserhöhung einer Verringerung der Zentrifugalkraft entspricht. Durch Veränderung der Querschnittsform und -größe kann Einfluss auf die Strömungsgeschwindigkeit genommen werden.

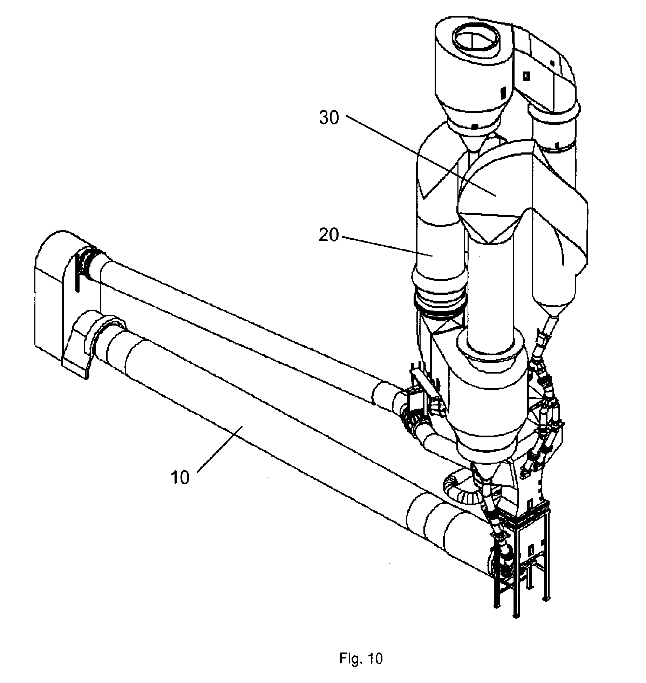

Fig. 10 zeigt schließlich eine dreidimensionale Darstellung einer Anlage zur Wärmebehandlung von feinkörnigem Gut bei der Zementherstellung mit einem Drehrohrofen 10, einem Calcinator 20 und einem Vorwärmer 30. Der Calcinator 20 und/oder der Vorwärmer 30 können dabei gemäß der in den Figuren 1 bis 9 beschriebenen Vorrichtung ausgebildet sein.

## Patentansprüche

1. Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien, mit
- wenigstens einer wendel- und/oder spiralartigen Leitung (1b), in der durch Zentrifugalkräfte eine Gas-Feststoff-Suspension in einen Feststoffstrom (5) und einen Gasstrom (6) getrennt wird und
- wenigstens einer mit dem Ende der wendel- und/oder spiralartigen Leitung in Verbindung stehenden Abscheidekammer (2), die mit einer Gasleitung (4; 4.1; 4.2) zum Ableiten des Gasstroms in Verbindung steht oder die durch einen Teil der Gasleitung gebildet wird, wobei an die Abscheidekammer eine Feststoffleitung zum Ableiten des Feststoffstroms angeschlossen ist,
**dadurch gekennzeichnet, dass** die wendel- und/oder spiralartige Leitung (1b) tangential unter einem Winkel (α) gegenüber der Horizontalen von mindestens 30° in die Abscheidekammer (2) mündet und der Querschnitt der Abscheidekammer im Bereich der Einmündung 0,5 - 1,5 mal so groß ist wie der Querschnitt der wendel- und/oder spiralartigen Leitung.

2. Vorrichtung nach Anspruch 1, **dadurch gekennzeichnet, dass** die Abscheidekammer (2) rund ausgebildet ist.

3. Vorrichtung nach Anspruch 1, **dadurch gekennzeichnet, dass** der Querschnitt der Abscheidekammer (2) im Bereich der Einmündung 0,5 - 1,5 mal so groß ist wie der Querschnitt der Gasleitung (4; 4.1; 4.2).

4. Vorrichtung nach Anspruch 1, **dadurch gekennzeichnet, dass** im unteren Bereich der Abscheidekammer (2) die Feststoffleitung (3) und im oberen Bereich der Abscheidekammer die Gasleitung (4) angeschlossen sind.

5. Vorrichtung nach Anspruch 1, **dadurch gekennzeichnet, dass** der untere Teil der Abscheidekammer (2) trichterförmig verjüngt ausgebildet ist.

6. Vorrichtung nach Anspruch 5, **dadurch gekennzeichnet, dass** die Feststoffleitung (3) an den trichterförmig verjüngenden Teil (2b) der Abscheidekammer (2) angeschlossen ist.

7. Vorrichtung nach Anspruch 1, **dadurch gekennzeichnet, dass** die Gasleitung (4.1) nach Art eines Tauchrohres in die Abscheidekammer ragt.

8. Vorrichtung nach Anspruch 1, **dadurch gekennzeichnet, dass** Gasleitung (4) in Gasströmungsrichtung wenigstens eine erste und eine zweite Querschnittsgröße und/oder -form aufweist.

9. Vorrichtung nach Anspruch 1, **dadurch gekennzeichnet, dass** die Achse, um die sich die wendel- und/oder spiralartige Leitung (1b) dreht, gegenüber der Vertikalen geneigt ist.

10. Vorrichtung nach Anspruch 1, **dadurch gekennzeichnet, dass** die Vorrichtung als mehrstufige und/oder mehrsträngige Anordnung mit mehreren Abscheidekammern (2, 2', 2") und zugehörigen wendel- und/oder spiralartigen Leitungen (1b, 1'b, 1"b) ausgebildet ist.

11. Vorrichtung nach Anspruch 1, **dadurch gekennzeichnet, dass** die Abscheidekammer (2) rotationssymmetrisch ausgebildet ist.

12. Vorrichtung nach Anspruch 1, **dadurch gekennzeichnet, dass** die Abscheidekammer (2) und die Gasleitung (4.1; 4.2) einen unterschiedlichen Durchmesser aufweisen.

13. Verfahren zur Durchführung chemischer und/oder physikalischer Reaktionen zwischen einem Feststoff und einem Gas, insbesondere zur Vorwärmung, Kühlung und/oder Calcinierung von feinkörnigen Materialien, mit einer Vorrichtung gemäß einem oder mehreren der vorhergehenden Ansprüche, wobei die Gas-Feststoff-Suspension über die wendel- und/oder spiralartige Leitung (1b) derart in die Abscheidekammer (2) eingeleitet wird, dass der Gasstrom eine Drallströmung in der Abscheidekammer (2) erzeugt.

## Claims

1. Device for carrying out chemical and/or physical reactions between a solid material and a gas, in particular for preheating, cooling and/or calcining fine-grained materials, having:
- at least one helical and/or spiral line (1b), in which a gas/solid material suspension is separated by centrifugal forces into a solid material flow (5) and a gas flow (6) and
- at least one separation chamber (2) which is connected to the end of the helical and/or spiral line and which is connected to a gas line (4; 4.1; 4.2) in order to direct the gas flow away or which is formed by a portion of the gas line, a solid material line for directing the solid material flow away being connected to the separation chamber,
**characterised in that** the helical and/or spiral line (1b) opens into the separation chamber (2) tangentially at an angle (α) of at least 30° relative to the horizontal and the cross-section of the separation chamber in the region of the opening is from 0.5 to 1.5 times as large as the cross-section of the helical and/or spiral line.

2. Device according to claim 1, **characterised in that** the separation chamber (2) is constructed so as to be round.

3. Device according to claim 1, **characterised in that** the cross-section of the separation chamber (2) in the region of the opening is from 0.5 to 1.5 times as large as the cross-section of the gas line (4; 4.1; 4.2).

4. Device according to claim 1, **characterised in that** the solid material line (3) is connected in the lower region of the separation chamber (2) and the gas line (4) is connected in the upper region of the separation chamber.

5. Device according to claim 1, **characterised in that** the lower portion of the separation chamber (2) is constructed so as to narrow in a funnel-like manner.

6. Device according to claim 5, **characterised in that** the solid material line (3) is connected to the portion (2b) of the separation chamber (2) narrowing in a funnel-like manner.

7. Device according to claim 1, **characterised in that** the gas line (4.1) extends into the separation chamber in the manner of a submerged pipe.

8. Device according to claim 1, **characterised in that** the gas line (4) has at least a first and a second cross-section size and/or shape in the direction of flow of the gas.

9. Device according to claim 1, **characterised in that** the axis, about which the helical and/or spiral line (1b) is wound, is inclined relative to the vertical.

10. Device according to claim 1, **characterised in that** the device is in the form of a multiple-step and/or multiplestrand arrangement having a plurality of separation chambers (2, 2', 2") and associated helical and/or spiral lines (1b, 1'b, 1"b).

11. Device according to claim 1, **characterised in that** the separation chamber (2) is constructed so as to be rotationally symmetrical.

12. Device according to claim 1, **characterised in that** the separation chamber (2) and the gas line (4.1; 4.2) have different diameters.

13. Method for carrying out chemical and/or physical reactions between a solid material and a gas, in particular for preheating, cooling and/or calcining fine-grained materials, having a device according to one or more of the preceding claims, wherein the gas/solid material suspension is introduced into the separation chamber (2) via the helical and/or spiral line (1b) in such a manner that the gas flow produces a twisting flow in the separation chamber (2).

## Revendications

1. Dispositif pour la réalisation de réactions chimiques et / ou physiques entre une matière solide et un gaz, en particulier pour le préchauffage, le refroidissement et / ou la calcination de matériaux à grains fins, avec
- au moins une conduite en colimaçon et / ou en spirale (1b), dans laquelle une suspension de gaz et matière solide est séparée en un flux de matière solide (5) et un flux de gaz (6), et
- au moins une chambre de séparation (2), qui, en liaison avec l'extrémité de la conduite en colimaçon et / ou en spirale, est reliée à une conduite de gaz (4 ; 4.1 ; 4.2) pour la dérivation du flux de gaz, sachant que, pour la dérivation du flux de matière solide, une conduite de matière solide est raccordée à la chambre de séparation, **caractérisé en ce que** la conduite en colimaçon et / ou en spirale (1b) débouche, tangentiellement, sous un angle (α) d'au moins 30 ° par rapport à l'horizontale, dans la chambre de séparation (2), et que la section transversale de ladite chambre de séparation est, dans la région du débouché, 0,5 à 1,5 fois plus grande que la section transversale de la conduite en colimaçon et / ou en spirale.

2. Dispositif selon la revendication 1, **caractérisé en ce que** la chambre de séparation (2) est de forme ronde.

3. Dispositif selon la revendication 1, **caractérisé en ce que**, dans la région du débouche, la section transversale de la chambre de séparation (2) est 0,5 à 1,5 fois plus grande que la section transversale de la conduite de gaz (4 ; 4.1 ; 4.2).

4. Dispositif selon la revendication 1, **caractérisé en ce que** la conduite de matière solide (3) est raccordée dans la zone inférieure de la chambre de séparation (2) et la conduite de gaz (4 ; 4.1 ; 4.2) est raccordée dans la zone supérieure de ladite chambre de séparation.

5. Dispositif selon la revendication 1, **caractérisé en ce que** la partie inférieure de la chambre de séparation (2) s'amincit en forme d'entonnoir.

6. Dispositif selon la revendication 5, **caractérisé en ce que** la conduite de matière solide (3) est raccordée à la partie (2b) amincie en forme d'entonnoir de la chambre de séparation (2).

7. Dispositif selon la revendication 1, **caractérisé en ce que** la conduite de gaz (4.1) fait saillie, à la manière d'un périscope, dans la chambre de séparation.

8. Dispositif selon la revendication 1, **caractérisé en ce que** la conduite de gaz (4), présente, dans la direction du flux de gaz, au moins une première et une deuxième grandeur et / ou forme de section transversale.

9. Dispositif selon la revendication 1, **caractérisé en ce que** l'axe, autour duquel tourne la conduite en colimaçon et / ou en spirale (1b), est incliné par rapport à la verticale.

10. Dispositif selon la revendication 1, **caractérisé en ce que** le dispositif est réalisé sous la forme d'un arrangement à plusieurs étages et / ou à plusieurs voies, avec plusieurs chambres de séparation (2, 2', 2") et plusieurs conduites en colimaçon et / ou en spirale (1b, 1b', 1b") y associées.

11. Dispositif selon la revendication 1, **caractérisé en ce que** la chambre de séparation (2) est de conception symétrique en rotation.

12. Dispositif selon la revendication 1, **caractérisé en ce que** les chambres de séparation (2) et la conduite de gaz (4.1 ; 4.2) présentent un diamètre différent.

13. Procédé pour la réalisation d'une réaction chimique et / ou physique entre une matière solide et un gaz, en particulier pour le préchauffage, le refroidissement et / ou la calcination de matériaux à grains fins, avec un dispositif selon l'une ou plusieurs des revendications précédentes, sachant que la suspension de gaz et matière solide est introduite dans la chambre de séparation (2), par l'intermédiaire de la conduite en colimaçon et / ou en spirale (1b), de sorte que le flux de gaz génère un écoulement tourbillonnaire dans la chambre de séparation (2).
